(19) Europäisches Patentamt
European Patent Office
Office européen des brevets

(11) **EP 0 964 264 A2**

(12) **EUROPÄISCHE PATENTANMELDUNG**

(43) Veröffentlichungstag:
**15.12.1999 Patentblatt 1999/50**

(51) Int. Cl.$^6$: **G01S 3/808**

(21) Anmeldenummer: **99108390.8**

(22) Anmeldetag: **29.04.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **10.06.1998 DE 19825886**

(71) Anmelder:
**STN ATLAS Elektronik GmbH**
**28309 Bremen (DE)**

(72) Erfinder: **Busch, Rainer**
**26131 Oldenburg (DE)**

(54) **Verfahren zur Bestimmung der Tiefe von getauchten Schallquellen**

(57) Bei einem Verfahren zur Bestimmung der Tiefe von getauchten Schallquellen unter Verwendung einer unter Wasser geschleppten akustischen Antenne zur Schallquellenortung, die eine Vielzahl von beabstandet aufgereihten Hydrophonen aufweist, wird aus den elektrischen Ausgangssignalen der Hydrophone mittels Beamforming eine Richtcharakteristik der Antenne mit einer Hauptkeule maximaler Empfangsempfindlichkeit (Beam 25) gebildet, der Beam (25) in Vertikalrichtung geschwenkt und die Intensität des Beamformer-Ausgangssignal in Zuordnung zur jeweiligen Beamschwenklage gemessen. Aus der dem Intensitätsmaximum zugehörigen Schwenklage des Beams (25), der Tauchtiefe der akustischen Antenne (10) und der Entfernung zur Schallquelle wird die Tauchtiefe der Schallquelle errechnet.

$$\tau_n = (n-1)\frac{d}{c} \cdot \sin\vartheta_i \qquad (1)$$

Fig. 3

**Beschreibung**

Die Erfindung betrifft ein Verfahren zur Bestimmung der Tiefe von getauchten Schallquellen unter Verwendung einer unter Wasser geschleppten akustischen Antenne zur Schallquellenortung der im Oberbegriff des Anspruchs 1 definierten Gattung.

Im Wasser geschleppte akustische Antennen, auch Streamer oder Schleppantennen genannt, dienen zur Ortung von im Wasser befindlichen Schallquellen, z.B. U-Booten, Überwasserschiffen und dgl., aus großer Distanz, wobei üblicherweise die Peilung und die Entfernung zur Schallquelle bestimmt und daraus die Lage der Schallquelle in der Horizontale ermittelt wird.

Bei der Ortung von getauchten Schallquellen, die sich in sehr unterschiedlichen Wassertiefen befinden können, besteht ein wesentliches Interesse daran, auch die Tauchtiefe der Schallquelle festzustellen.

Der Erfindung liegt die Aufgabe zugrunde, ein Verfahren zur Bestimmung der Tauchtiefe von Schallquellen anzugeben, das ohne nennenswerten zusätzlichen Hardwareaufwand mit der für die Sonarortung vorhandenen Schleppantenne realisiert werden kann.

Die Aufgabe ist durch die Merkmale des Patentanspruchs 1 gelöst.

Das erfindungsgemäße Verfahren hat den Vorteil, daß zur zusätzlichen Bestimmung der Tauchtiefe der Schallquelle nach deren Orten mittels der Schleppantenne nur ein geringfügiger Zusatzaufwand erforderlich ist, der im wesentlichen nur darin besteht, die Antennen mit Mitteln auszurüsten, mit deren Hilfe die geschleppte Antenne in eine Schräglage mit konstantem oder fortlaufend sich änderndem Neigungswinkel gebracht werden kann. Darüber hinaus wird nur eine Signalverarbeitung benötigt, die in nahezu identischer Form bereits für Ortungszwecke vorhanden ist und weitgehend genutzt werden kann.

Zweckmäßige Ausgestaltungen des erfindungsgemäßen Verfahrens mit vorteilhaften Weiterbildungen der Erfindung ergeben sich aus den weiteren Ansprüchen.

Das Schwenken der Richtcharakteristik der Antenne bzw. deren Hauptkeule mit maximaler Empfangsempfindlichkeit, auch Beam oder Hauptbeam genannt, kann - wie bekannt - auf mechanische oder elektronische Weise erfolgen. Im ersten Fall wird gemäß einer vorteilhaften Ausführungsform der Erfindung die akustische Antenne fortlaufend um ihren Schleppkraftangriffspunkt in einem Winkelbereich bis annähernd 90° aus der Horizontalen geschwenkt, wobei die Schleppgeschwindigkeit stark herabgesetzt oder das Schleppfahrzeug zum Stillstand gebacht wird, und in jeder Schrägwinkelstellung werden die Hydrophonausgangssignale aufaddiert. Im zweiten Fall wird die akustische Antenne während der Schleppfahrt unter einem festen spitzen Winkel zur Horizontalen geneigt oder angestellt, und die Hydrophonausgangssignale werden nach einer geeigneten Zeitverzögerung aufaddiert, wobei sich die Größe der Zeitverzögerung nach bekannter Gesetzmäßigkeit durch den gewünschten Schwenkwinkel der Hauptkeule der Richtcharakteristik ergibt.

Gemäß einer bevorzugten Ausführungsform der Erfindung werden als Mittel für die Beeinflussung der Antennenlage Hohlräume innerhalb der Antenne vorgesehen, die über die Antennenlänge verteilt angeordnet sind und mittels elektrisch angetriebener Pumpelemente geflutet oder gelenzt werden können.

Das erfindungsgemäße Verfahren ist anhand eines in der Zeichnung dargestellten Ausführungsbeispiels einer Schleppantenne im folgenden näher beschrieben. Es zeigen jeweils in schematischer Darstellung:

Fig. 1    eine in einem Seegebiet von einem Schleppfahrzeug geschleppte Unterwasser-Schleppantenne in Seitenansicht,

Fig. 2    eine gleiche Darstellung wie in Fig. 1 mit einer gegen die Horizontale geneigten Schlepplage der Schleppantenne,

Fig. 3    eine Hardwaredarstellung der Signalverarbeitung der Hydrophonausgangssignale der Schleppantenne,

Fig. 4    einen akustisch sensitiven Teil der Schleppantenne in Fig. 1 oder 2 mit Gleichungen zur Berechnung der Tauchtiefe einer georteten Schallquelle.

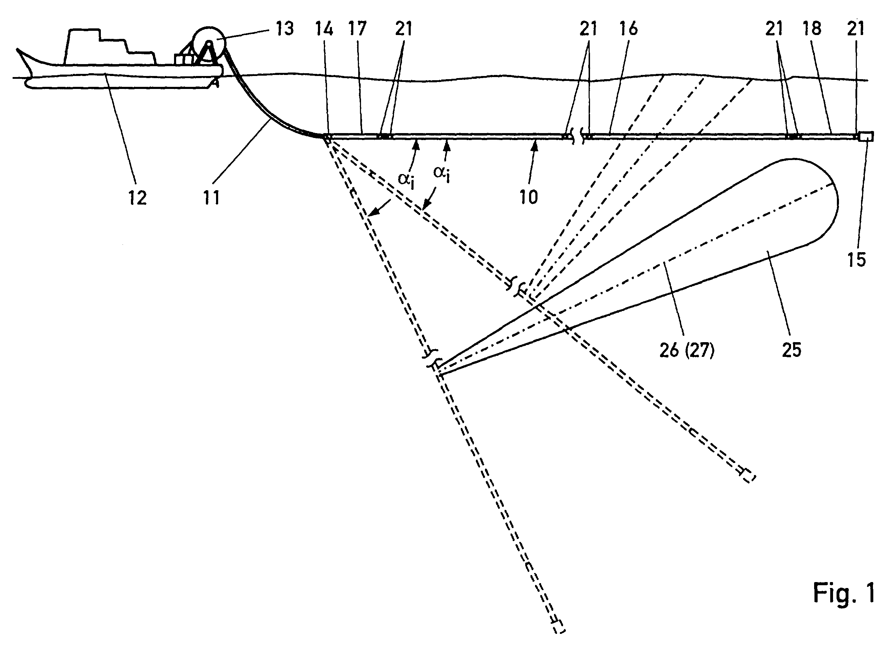

Die in Fig. 1 in schematischer Seitenansicht zu sehende Unterwasser-Schleppantenne weist einen Schleppstrang 10 und ein Schleppkabel 11 auf, das den Schleppstrang 10 mit einem Schleppfahrzeug 12 verbindet. Das Schleppfahrzeug 12 ist hier als Überwasserschiff dargestellt, kann aber auch ein U-Boot sein. Das Schleppkabel 11 ist bordseitig an einer Aufwickeltrommel 13 befestigt, auf welche sowohl das Schleppkabel 11 als auch der Schleppstrang 10 aufgewickelt werden können.

Der Schleppstrang 10 ist mittels eines Steckers 14, der sowohl eine mechanische als auch eine elektrische Verbindung herstellt, mit dem Schleppkabel 11 verbunden und trägt an seinem davon abgekehrten Ende eine Schleppbremse 15, die beim Schleppen für eine gewisse Zugspannung am Schleppstrang 10 entgegen Schlepprichtung sorgt, wodurch der Schleppstrang 10 weitgehend gestreckt gehalten wird. Der Schleppstrang 10 besitzt eine akustische Sektion 16, die die eigentliche akustische Antenne zur Schallquellenortung darstellt. Die akustische Sektion 16 ist zwischen zwei Dämpfungsmodulen 17, 18, sog. VIMs (Vibration Isolation Moduls) angeordnet. Der vordere Dämpfungsmodul 17 verbindet die akustische Sektion 16 mit dem Schleppkabel 11, während der hintere Dämpfungsmodul 18 die Schleppbremse 15 an die akustische Sektion 16 ankoppelt. Beide Dämpfungsmodule 17, 18 dienen zur akustischen Entkopplung der akustischen Sektion 16 gegenüber den Schlag-und Vibrationsgeräuschen des Schleppkabels 11 bzw. der Schleppbremse 15.

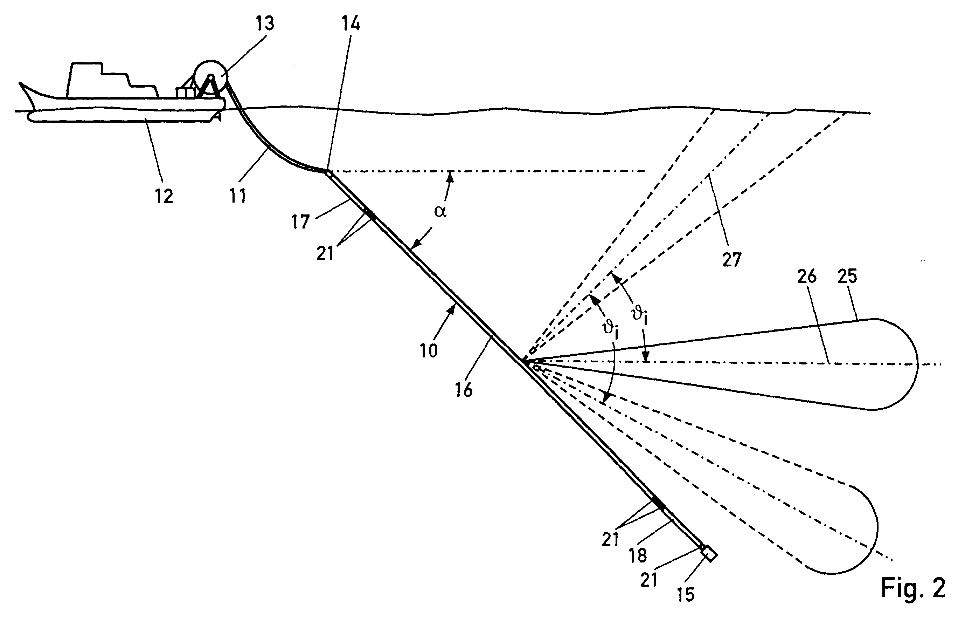

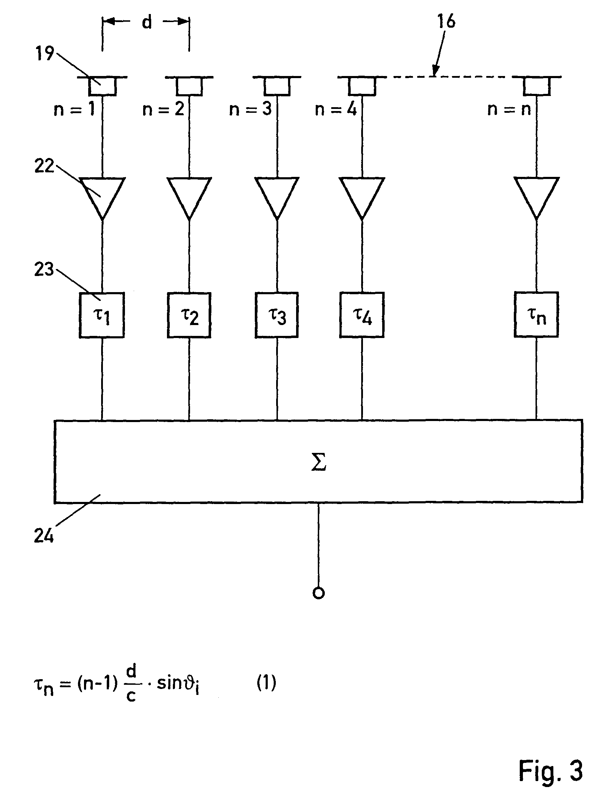

Die akustische Sektion 16, die in bekannter Weise eine Vielzahl von in Fig. 3 schematisch dargestellten Hydrophonen 19 aufweist, ist in einem elastischen Schlauch angeordnet, der mit einem Auftriebsmittel z.B. Öl oder Gel, gefüllt ist. Auch die beiden Dämpfungsmodule 17, 18 werden von mit dem Auftriebsmittel gefüllten Schlauchabschnitten gebildet, die an dem Schlauch 20 mit der akustischen Sektion 16 angekoppelt sind. In dem Schlauch 20 sind über die Länge des Schleppstrangs 10 verteilt angeordnete Hohlräume 21 vorgesehen, die in Fig 1 und 2 schematisch angedeutet sind. Solche Hohlräume sind dabei sowohl in den Dämpfungsmodulen 17 und 18 als auch in der akustischen Sektion 16 vorgesehen. Jedem Hohlraum 21 ist ein elektrisch angetriebenes Pumpenelement (hier nicht dargestellt) zugeordnet, mittels dessen jeder Hohlraum 21 individuell mit Wasser aus der Schleppstrangumgebung gefüllt oder durch Abpumpen von Wasser in die Schleppstrangumgebung wieder gelenzt werden kann. Durch geeignete Füllung der im Schleppstrang 10 hinteren Hohlräume 21 und entsprechendes Lenzen der im Schleppstrang 10 vorderen Hohlräume 21 kann der Schleppstrang 10 und damit die akustische Sektion 16 in ihrem Neigungswinkel $\alpha_i$ bzw. $\alpha$ gegenüber der Horizontalen geneigt werden, wie dies in Fig. 1 und 2 angedeutet ist, wobei in Fig. 2 die Wasserfüllung der Hohlräume 21 durch Schwärzung der Hohlräume 21 symbolisiert ist.

Bei dem in Fig. 1 illustrierten Verfahren zur Bestimmung der Tauchtiefe einer georteten Schallquelle wird der Neigungswinkel $\alpha_i$ des Schleppstrangs 10 gegenüber der Horizontalen stetig verändert, während bei dem in Fig. 2 illustrierten Verfahren der Neigungswinkel $\alpha$ des Schleppstrangs 10 gegenüber der Horizontalen konstant gehalten wird. In beiden Fällen werden bei der Schleppfahrt mittels der Hydrophone 19 der akustischen Sektion 16 fortwährend alle sich im Wasser ausbreitenden akustischen Geräusche empfangen und in entsprechende elektrische Ausgangssignale gewandelt. Aus den elektrischen Ausgangssignalen der Hydrophone 19 wird durch eine als Beamforming bezeichnete Signalverarbeitung die Richtcharakteristik der akustischen Sektion 16 mit einer Hauptkeule maximaler Empfangsempfindlichkeit, dem sog. Haupt- oder Empfangsbeam, und weitgehend unterdrückten Nebenkeulen oder Nebenzipfeln gebildet, über die noch ein vernachlässigbarer Schallempfang möglich ist. Diese Richtcharakteristik wird in bekannter Weise durch Amplitudenstaffelung, Zeitverzögerung und Addition aller Hydrophonausgangssignale erzeugt, wozu - wie in Fig. 3 dargestellt ist - Verstärker 22, Verzögerungsglieder 23 und ein Summierer 24 vorgesehen sind. In den jeweils einem Hydrophon 10 nachgeschalteten Verstärkern 22 werden die Ausgangssignale individuell verstärkt, wobei eine über die Gesamtzahl der Verstärker 22 gelegte dreieckförmige oder binomale Verstärkung in Anwendung kommen kann. In beiden Fällen wird die Verstärkung des Ausgangssignals des mittleren Hydrophons 19 in der akustischen Sektion 16 am größten gewählt und nimmt zu den beiden an den Enden der akustischen Sektion 16 liegenden Hydrophonen 19 linear oder nach einer Gauß-Kurve ab. Die Zeitverzögerungsglieder 23, die ebenfalls jedem Hydrophon 19 nachgeschaltet sind, dienen zum Schwenken des Empfangsbeams aus der Normalen 27 zur Längsachse der akustischen Sektion 16 heraus und werden im Zusammenhang mit dem in Fig. 2 illustrierten Verfahren noch näher erläutert. Mit der vorstehend beschriebenen Schleppantenne, die für die akustische Ortung mit in der in Fig. 1 dargestellten, horizontal ausgerichteten Schlepplage des Schleppstrangs 10 von dem Schleppfahrzeug 12 gezogen wird, werden in bekannter Weise Schallquellen, die Schall ins Wasser abstrahlen, z.B. U-Boote, auf große Distanz geortet, d.h. deren Lage nach Richtung und Entfernung zum Schleppfahrzeug 12 bestimmt. Ist eine solche Schallquelle geortet, so kann nunmehr zusätzlich die Tauchtiefe der Schallquelle, d.h., ihr vertikaler Abstand von der Wasseroberfläche, wie folgt bestimmt werden:

Die in Fig. 1 und 2 durch den Empfangsbeam 25 illustrierte Richtcharakteristik der akustischen Sektion 16 wird in Vertikalrichtung geschwenkt und dabei die Intensität des Empfangssignals im Empfangsbeam 25, auch Beamformer-Ausgangssignal genannt, in Zuordnung zur jeweiligen Beamschwenklage gemessen und aus allen Meßwerten das Intensitätsmaximum ermittelt. Aus der dem Intensitätsmaximum zugehörigen Schwenklage des Beams 25 wird unter Heranziehung der bekannten Entfernung der georteten Schallquelle zum Schleppfahrzeug 12 die Tauchtiefe der Schallquelle errechnet.

Bei dem in Fig. 1 illustrierten Verfahren wird zum Beamschwenken der Schleppstrang 10 um seinen Schleppkraftangriffspunkt am Stecker 14 stetig abgesenkt bis zu einem Neigungswinkel $\alpha_1$ gegenüber der Horizontalen von annähernd 90°. Anschließend wird der Schleppstrang 10 wieder in seine horizontale Lage ($\alpha_i$ = 0) stetig zurückgeschwenkt, und zwar bei extrem reduzierter Schleppgeschwindigkeit oder vorübergehendem Stillstand des Schleppfahrzeugs 12, damit die akustische Sektion 16 sich nicht durch den Strömungswiderstand verbiegt, sondern ihre im wesentlichen lineare Ausrichtung in Strecklage beibehält. Wie bereits erwähnt, erfolgt das Absenken und Anheben des Schleppstrangendes durch entsprechendes Fluten und Lenzen der über dem Schleppstrang 10 verteilt angeordneten Hohlräume 21. In der Signalverarbeitung werden die amplitudengestaffelten Ausgangssignale der Hydrophone 19 ohne Zeitverzögerung aufaddiert. Die Zeitverzögerungsglieder 23 können daher entfallen, oder alle Zeitverzögerungsglieder können auf den gleichen Zeitverzögerungswert eingestellt sein. Damit steht in jeder Schwenklage $\alpha_i$ der Schleppstrang 10 der Empfangsbeam 25, also die Richtung größter Empfangsempfindlichkeit der Richtcharakteristik der akustischen Sektion 16, senkrecht auf der Längsachse der akustischen Sektion 16. Die Achse des Empfangsbeams, die sog. Hauptachse der Richtcharakteristik der akustischen Sektion 16, ist in Fig. 1, 2 und 4 mit 26 strichpunktiert eingezeichnet.

Bei dem in Fig. 2 illustrierten Verfahren erfolgt die vertikale Beamschwenkung bei fester Schwenklage des Schleppstrangs 10 gegenüber der Horizontalen durch Schwenken der Richtcharakteristik gegenüber der Normalen 27 zur Längsachse der akustischen Sektion 16. In Fig. 2 ist der feste Neigungswinkel des Schleppstrangs 10 gegenüber der Horizontalen mit $\alpha$ und der sich verändernde Schwenkwinkel der Richtcharakteristik bzw. deren Hauptachse 26 oder des Empfangsbeams 25 bzw. dessen Beamachse gegenüber der Normalen 27 mit $\vartheta_i$ bezeichnet. Die Schwenkung des Beams 25 erfolgt durch Zeitverzögerung der einzelnen Hydrophonausgangssignale um den Betrag $\tau_n$, wobei n die Ordnungszahl der in der akustischen Sektion 16 aufgereihten Hydrophone 19, laufend von dem sich an dem Dämpfungsmodul 17 anschließenden vorderen Ende der Sektion 16 aus, ist. Die Größe $\tau_n$ für jedes Hydrophonausgangssignal berechnet sich gemäß der in Fig. 3 angegebenen Gl. (1), wobei d der Abstand zwischen den Hydrophonen 19 und $\vartheta_n$ der jeweils eingestellte Schwenkwinkel der Hauptachse 26 gegenüber der Normalen 27 zur Längsachse der akustischen Sektion 16 ist. Der Winkel $\vartheta_n$ wird stetig von 0 bis annähernd 90° verändert, kann aber auch bei einem größeren Neigungswinkel $\alpha$ des Schleppstrangs 10 gegenüber der Horizontalen über 0° hinaus bis annähernd -90° verändert werden.

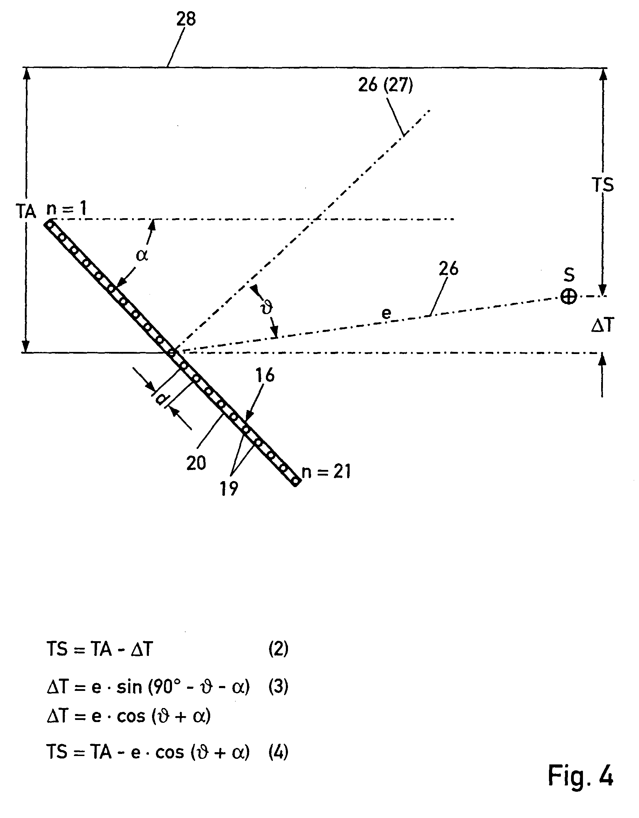

Die Berechnung der Tauchtiefe TS der Schallquelle S ist in Fig. 4 illustriert und gleichungsmäßig angegeben. Die Tauchtiefe TS wird gemäß Gl. (4) in Fig. 4 errechnet, wobei TA der Abstand des mittleren Hydrophons 19 in der akustischen Sektion 16 von der Wasseroberfläche 28 und e die gemessene Entfernung der Schallquelle S ist. Bei dem Verfahren gemäß Fig. 1 ist in Gl. (4) $\vartheta$ = 0 zu setzen und für $\alpha$ derjenige Schwenkwinkel $\alpha_i$ einzusetzen, bei dem das Intensitätsmaximum auftritt. Bei dem in Fig. 2 illustrierten Verfahren ist in Gl. (4) $\alpha$ entsprechend der gewählten konstanten Neigung des Schleppstrangs 10 gegenüber der Normalen 27 zu setzen und für $\vartheta$ derjenige Winkel $\vartheta_i$ einzusetzen, bei dem das Intensitätsmaximum auftritt.

## Patentansprüche

1.  Verfahren zur Bestimmung der Tiefe von getauchten Schallquellen unter Verwendung einer unter Wasser geschleppten akustischen Antenne (16) zur Schallquellenortung, die eine Vielzahl von beabstandet hintereinander aufgereihten Hydrophonen (19) aufweist, dadurch gekennzeichnet, daß aus den elektrischen Ausgangssignalen der Hydrophone (19) mittels einer als Beamforming bezeichneten Signalverarbeitung eine Richtcharakteristik der Antenne (16) mit einer Hauptkeule maximaler Empfangsempfindlichkeit (Beam 25) gebildet wird, daß der Beam (25) in Vertikalrichtung geschwenkt und die Intensität des Beamformer-Ausgangssignals in Zuordnung zur jeweiligen Beamschwenklage gemessen wird und daß aus der dem Intensitätsmaximum zugehörigen Schwenklage des Beams, der Tauchtiefe (TA) der akustischen Antenne (16) und der Entfernung (e) zur Schallquelle (S) deren Tauchtiefe (TS) errechnet wird.

2.  Verfahren nach Anspruch 1, dadurch gekennzeichnet, daß zum Beamschwenken die akustische Antenne (16) um ihren Schleppkraftangriffspunkt in einem Winkelbereich bis zu 90° aus der Horizontalen geschwenkt wird und daß in jeder Schwenkwinkelstellung die Hydrophonausgangssignale aufaddiert werden.

3.  Verfahren nach Anspruch 2, dadurch gekennzeichnet, daß das Schwenken der akustischen Antenne (16) bei extrem niedriger Schleppgeschwindigkeit oder vorübergehendem Stillstand der akustischen Antenne (16) durchgeführt wird.

4.  Verfahren nach Anspruch 1, dadurch gekennzeichnet, daß die akustische Antenne (16) unter einem festen spitzen Winkel ($\alpha$) zur Horizontalen geneigt oder angestellt wird und die Hydrophonausgangssignale gemäß

$$\tau_n = (n\text{-}1)\frac{d}{c}\sin\vartheta_i$$

verzögert werden, wobei n die Ordnungszahl der Hydrophone (19) längs der akustischen Antenne (16), d der gegenseitige Hydrophonabstand, c die Schallgeschwindigkeit und $\vartheta_i$ der Winkel der Richtung größter Empfangsempfindlichkeit (Hauptachse 26) gegenüber der Normalen (27) der akustischen Antenne (16) ist, daß die solchermaßen verzögerten Hydrophonausgangssignale aufaddiert werden und daß zum Beamschwenken der Richtungswinkel ($\vartheta_i$) stetig von 0° bis nahe ± 90° verändert wird.

5.  Verfahren nach einem der Ansprüche 2 bis 4, dadurch gekennzeichnet, daß die Hydrophonausgangssignale vor ihrer Addition einer Amplitudenstaffelung unterzogen werden.

6. Verfahren nach einem der Ansprüche 1 bis 5, dadurch gekennzeichnet, daß eine Mehrzahl von über die Antennenlänge verteilt angeordneten, wasserfüllbaren Hohlräumen (21) vorgesehen wird, die zur Erzeugung einer von der Horizontalen abweichenden Schräglage der akustischen Antenne (16) mittels elektrisch angetriebener Pumpelemente individuell geflutet oder gelenzt werden.

Fig. 1

Fig. 2

$$\tau_n = (n-1) \frac{d}{c} \cdot \sin\vartheta_i \qquad (1)$$

Fig. 3

$$TS = TA - \Delta T \qquad (2)$$

$$\Delta T = e \cdot \sin (90° - \vartheta - \alpha) \quad (3)$$

$$\Delta T = e \cdot \cos (\vartheta + \alpha)$$

$$TS = TA - e \cdot \cos (\vartheta + \alpha) \quad (4)$$

Fig. 4